# EUROPEAN PATENT APPLICATION

(11) **EP 4 718 011 A1**
(43) Date of publication of application: **01.04.2026**
(21) Application number: 25203245.3
(22) Date of filing: 19.09.2025
(51) Int. Cl.: F28D 20/00

(54) **CONTROLLED THERMOBLOCK, BASE CONTROLLED THERMOBLOCK, ASSEMBLY WITH CONTROLLED THERMOBLOCKS AND BASE CONTROLLED THERMOBLOCKS, ARRANGEMENT OF ASSEMBLY WITH CONTROLLED THERMOBLOCKS AND BASE CONTROLLED THERMOBLOCKS, THERMOREACTOR AS STORAGE OF SURPLUS ELECTRICAL ENERGY**

(30) Priority: 20.09.2024 CZ 20240363
(71) Applicant: Travel Tour Prague s.r.o., 11000 Praha 1 (CZ)
(72) Inventor: Klochuryak Ivanovyc, Ruslan, 25264 Velke Prilepy (CZ)
(74) Representative: Sedlák, Jirí

(57) **Abstract**

The controlled thermoblocks (1), (1Z), storage of surplus electrical energy in a thermal condition in the range from 300°C to 800°C as a long-lasting thermal energy storage system, made of a mixture containing admixtures of recyclable construction waste, equipped with a load-bearing heat-conducting metal structure (3), a cylindrical space for thermal connectors (8) and a cylindrical space for steam generation and heating.

The assembly (45) consists of controlled thermoblocks (1), (1Z), using thermal connectors (8) loosely placed on top of each other to form a three-dimensional body, in at least two layers.

The arrangement (46) of the assembly (45) with controlled thermoblocks (1) and base controlled thermoblocks (1Z) comprises an assembly (45) fitted with a steel expansion plate (19) placed on a layer (21) of loose metal balls (11) in a thermal insulation pit composed of an insulating mixture of waste materials.

The thermoreactor contains the arrangement (46) of the assembly (45) with controlled thermoblocks (1), (1Z), arranged in the ground pit connected to a steam generator (43), with an electric generator (30) for the generation of electrical energy, and a source of electrical energy conducted in a thermal insulation layer (24 and 25).

## Description

### Field of the Invention

The present invention relates to controlled storage of surplus electrical energy in a thermal condition in the range from 300°C to 800°C as a long-lasting thermal energy storage system composed of concrete or ceramic blocks.

### Background of the Invention

Currently, there is a huge increase in demand for electricity, but at the same time, this poses a huge problem that can arise from surpluses of produced unstored electricity, which is called "BLACK OUT". However, storing surplus produced electricity in batteries, capacitors, etc., is still relatively expensive, and battery production is very resource-intensive. In addition, there is again the environmental problem of waste from production and the overexploitation of mineral resources. Or the problem of creating an entire system for the production and distribution of electricity, given the significant number of connectable environmental renewable resources and thus the problem of "BLACK OUT".

The object is then to stabilize and store the electricity that has already been produced, including from environmentally clean sources, and subsequently stabilize it for feeding this stored electricity back into the grid.

The methods for storing excess energy are well known and there are many of them.

Among these is the storage of pumped water using excess electrical energy in a pumped-storage reservoir. This solution has a number of disadvantages and shortcomings, low effect of usability, limited only to the reservoir tank, problems with selecting a location at a suitable height, problems in the technological processes of pumping during switching (it is not easy to immediately switch the pipe for pumping water back up into the tank when there is an excess of electrical energy, etc.). For example, CZ 32 865 U1 shows a number of shortcomings - expansion and increase in capacity for electricity storage, erodibility of mine water, collapse of reservoir spaces, etc.

Water heating tanks also have low efficiency (steam generation, which creates undesired pressures), and water is not an ideal medium (it cannot maintain temperature, resulting in energy loss).

With large tanks, it is very difficult to further increase the temperature because this would create extreme pressure. This system is difficult to implement in large projects. It is feasible in smaller dimensions, with a lower degree of heating, which results in low efficiency of the entire project.

Otherwise, water as a medium cannot maintain its temperature for long, resulting in rapid energy loss and thus a loss of efficiency for the entire system.

Storing energy in stone is also inefficient - large gaps and the stone being surrounded by large volumes of air, another reason being the creation of extreme pressures and rapid cooling, plus large blocks of stone can be structurally damaged when heated to high temperatures, etc.

Storing energy in sand is also disadvantageous - sand has a low weight due to large amount of gaps for air, and after each heating, there is a massive loss of unstored energy, as the gaps cause poor energy transfer.

The issues mentioned above are currently addressed by the following documents:
WO9628703A2 addresses the design and method of thermal energy accumulation, but
   - does not address the expansion connection of materials of the entire block,
   - does not address the expansion and contraction of the material, it is placed in a single concrete block,
   - does not address construction to larger dimensions and the connection of multiple blocks with expansion connection,
   - does not utilize the recyclability of materials and ecology,
   - does not address the pressure generated at high temperatures,
   - does not contain an internal heat-conducting structure to reinforce the space and prevent the creation of pressures inside the block,
   - does not address the assembly of the block and the arrangement of the assembly of blocks in the thermoreactor.
The GB2070762A document addresses the storage of thermal energy at lower temperatures, but
   - does not address the possibility of storage at extremely high temperatures with high power,
   - does not address the expansion connection of materials,
   - does not address the expansion and contraction of the material, it is placed in a single concrete block,
   - does not address construction to larger dimensions,
   - is not intended for steam generation and energy supply to the infrastructure of cities,
   - does not utilize the recyclability of materials and ecology,
   - does not address the assembly of the block and the arrangement of the assembly of blocks in the thermoreactor.
The KR20220000210A document addresses the storage of thermal energy in materials, but
   - does not address the storage of thermal energy at high temperatures, for example up to 800°C, and the resulting pressure and interconnection of other parts of similar materials, the even transfer of heat throughout the material,
   - does not address the expansion connection of materials,
   - does not address the expansion and contraction of the material,
   - does not address construction to larger dimensions,
   - does not utilize the recyclability of materials and ecology,
   - does not address the assembly of the block and the arrangement of the assembly of blocks in the thermoreactor.

### Summary of the Invention

The above mentioned disadvantages are eliminated by a controlled thermoblock for the storage of surplus electrical energy in a thermal condition in the range from 300°C to 800°C as a long-lasting thermal energy storage system, the essence of which is that the controlled thermoblock is a regular three-dimensional body made of a concrete or ceramic mixture containing admixtures of recyclable construction waste,
wherein it is equipped inside its body with a metal structure, which is either a load-bearing metal structure of the controlled thermoblock, or a heating hot-water metal structure of the controlled thermoblock, which is connected to a source of electrical energy for heating, or a passive heat-conducting temperature-stabilizing metal structure of the controlled thermoblock, or combinations thereof,
wherein either there is at least one cylindrical space for high-pressure pipe for steam generation in the inner part of each controlled thermoblock in the direction of the longitudinal axis of the controlled thermoblock, with a cylindrical insert with space for inserted high-pressure pipe for steam generation, and further there is at least one cylindrical space for heating the controlled thermoblock in the inner part of each controlled thermoblock in the direction of its longitudinal axis parallel to each cylindrical space, with an insert with space for heating rods of a system of electric heating device for supplying thermal energy,
or both cylindrical spaces and form a single cylindrical space with a common axis containing, in the inner part of each controlled thermoblock in the direction of the longitudinal axis of the controlled thermoblock, at least one common space for inserting inserts,
wherein these controlled thermoblocks are provided on their upper and lower surface areas in the mixture forming its body with hollow formed cast spaces into which connecting expansion metal thermal connectors are freely inserted, and at the same time, are provided on their surface areas in the mixture forming its body with hollow formed cast spaces into which control sensors are inserted,
wherein these expansion metal thermal connectors are in conductive contact with the internal metal structure,
wherein these hollow cast spaces for inserting thermal connectors are either parallel to the cylindrical space for the inserted high-pressure pipe for steam generation and to the cylindrical space for the heating rods of the electric heating device for supplying thermal energy, or they are perpendicular to the cylindrical spaces,
wherein the electrical power lines of the thermal connectors are arranged in the insert for multi-phase electrical power lines placed in the body of the controlled thermoblock.

The controlled base thermoblock is a regular three-dimensional body made of a concrete or ceramic mixture containing admixtures of recyclable construction waste,
wherein it is equipped inside its body with a metal structure, which is either a load-bearing metal structure of the controlled base thermoblock, or a heating hot-water metal structure of the controlled base thermoblock, which is connected to a source of electrical energy for heating, or a passive heat-conducting temperature-stabilizing metal structure of the controlled base thermoblock, or combinations thereof,
wherein either there is at least one cylindrical space for high-pressure pipe for steam generation in the inner part of each controlled base thermoblock in the direction of the longitudinal axis of the controlled base thermoblock, with a cylindrical insert with space for inserted high-pressure pipe for steam generation,
and furthermore, in the inner part of each controlled base thermoblock, in the direction of its longitudinal axis parallel to each cylindrical space, there is at least one cylindrical space for heating the controlled base thermoblock with an insert with space for heating rods of a system of electric heating device for supplying thermal energy,
or both cylindrical spaces and form a single cylindrical space with a common axis containing, in the inner part of each controlled base thermoblock in the direction of the longitudinal axis of the controlled base thermoblock, at least one common space for inserting inserts,
wherein these controlled base thermoblocks are provided on their upper surface areas in the mixture forming its body with hollow formed cast spaces into which connecting expansion metal thermal connectors are freely inserted, and at the same time, are provided on their surface areas in the mixture forming its body with hollow formed cast spaces into which control sensors are inserted,
wherein these expansion metal thermal connectors are in conductive contact with the internal metal structure,
wherein these hollow cast spaces for inserting thermal connectors are either parallel to the cylindrical space for the inserted high-pressure pipe for steam generation and to the cylindrical space for the heating rods of the electric heating device for supplying thermal energy, or they are perpendicular to the cylindrical spaces,
wherein the surface area of the lower side of the controlled base thermoblocks is fitted with a first expansion metal plate,
wherein the electrical power lines of the thermal connectors are arranged in the insert for multi-phase electrical power lines placed in the body of the controlled base thermoblocks,
the insert with space for inserted high-pressure pipe for steam generation consists of at least one piece, which comes in various diameters and sizes,
the insert with space for the heating rods of the system of electric heating device for supplying thermal energy consists of at least one piece, which comes in various diameters and sizes.

The cylindrical insert with space for inserted high-pressure pipe is heat conductive.

The controlled thermoblock contains at least one cylindrical space for heating thermoblocks with at least one equivalent cylindrical space for high-pressure pipe for steam generation.

The controlled base thermoblock contains at least one cylindrical space for heating thermoblocks with at least one equivalent cylindrical space for high-pressure pipe for steam generation.

Recyclable construction waste includes materials such as concrete, porcelain, glass, ceramics, cinder, wood waste, metal filings and slag, stone gravel, or any combination thereof.

Assembly with controlled thermoblocks and controlled base thermoblocks consisting of controlled thermoblocks and controlled base thermoblocks
the assembly is composed of a three-dimensional body and consists of freely stacked layers of controlled thermoblocks, with at least one layer, and a bottom layer of the assembly consisting of a layer of controlled base thermoblocks,
where all individual controlled thermoblocks are freely connected horizontally and vertically to each other using expansion metal thermal connectors, furthermore, the individual controlled base thermoblocks are freely connected horizontally to each other using expansion metal thermal connectors and vertically connected to each other using thermal connectors are a layer of controlled base thermoblocks and a layer of controlled thermoblocks located above it,
wherein the cylindrical spaces for high-pressure pipes for steam generation of individual controlled thermoblocks and controlled base thermoblocks in the assembly containing inserts are connected longitudinally in the axis,
wherein the cylindrical spaces for heating the controlled thermoblock with an insert with space for heating rods of individual controlled thermoblocks in the assembly are connected longitudinally in the axis,
wherein the cylindrical spaces for heating the controlled base thermoblock with an insert with space for heating rods of individual controlled base thermoblocks in the assembly are connected longitudinally in the axis,
wherein multi-phase electric power lines are connected to the source of electrical energy together with the control temperature sensors of the controlled thermoblock or controlled base thermoblock, where these multi-phase electric power lines are interconnected in the individual thermoblocks.

The assembly with controlled thermoblocks and controlled base thermoblocks consists of building elements of controlled thermoblocks and controlled base thermoblocks of the same shape of a cube, a cuboid or a circular segment, or a combination of a cube, a cuboid, or a circular segment.

The arrangement of the assembly with controlled thermoblocks and controlled base thermoblocks with controlled thermoblocks and controlled base thermoblocks is placed with the surface area of the first expansion metal plate on a layer of loose metal expansion balls, which are placed on their opposite side on the second lower steel expansion plate inserted in the insulating layer of a thermally insulated solid base, composed of an insulating mixture consisting of a mixture of waste materials from the group of glass, stone, reinforced concrete, ceramics, or a combination thereof, wherein these second lower steel expansion plates are connected and form a single overall surface.

A thermoreactor containing the arrangement of the assembly with controlled thermoblocks and controlled base thermoblocks is the arrangement of the assembly with controlled thermoblocks and controlled base thermoblocks covered on the surface area of its upper part with a metal cover plate placed in a metal pocket, which plate is provided with through holes for pressure valves located in the support cylinders, where these valves pass through to outside the thermoreactor space,
wherein this assembly of arrangement and cover metal plate, outside the area of the support cylinders, is surrounded by a first thermal insulation layer,
wherein this first thermal insulation layer forms, together with the thermally insulated solid base, a compact closed body placed in the second thermal insulation layer, wherein the second thermal insulation layer is covered with second upper plates on expansion metal cylinders placed on hinged supports and between which there is a free connection,
where this set of expansion metal cylinders forming supports for the loosely connected upper first cover plates is located in the upper part of the third thermal insulation layer spatially above the support cylinders,
wherein high-pressure pipes for steam generation inserted in the inserts of individual controlled thermoblocks and controlled base thermoblocks of the assembly are connected to a steam generator with an electric generator for the generation of electrical energy,
wherein the heating rods of the electric heating device in the inserts for the heating rods of the individual controlled thermoblocks and controlled base thermoblocks are connected to the electric heating device,
wherein the multi-phase electric power lines of the thermal connectors are connected to the multi-phase electrical power supply lines for the thermal connectors and control sensors,
wherein the first upper cover plates rest with their lower side on the expansion device consisting of upper metal plates provided with holes for pressure valves, which rest on their opposite side on metal expansion balls, which rest on their opposite side on lower expansion metal plates with holes for inserting pressure valves,
wherein the lower expansion metal plate rests on support cylinders that rest on the opposite side of the cover plate,
wherein all of which is covered with a waterproofing layer, with the thermoreactor placed in the layer of insulating construction waste material.

Furthermore, in the preferred embodiment the controlled thermoblock and the controlled basic thermoblock are equipped inside their bodies with a metal structure, which is either a load-bearing metal structure of the controlled thermoblock, or a heating hot-water metal structure of the controlled thermoblock, which is connected to a source of electrical energy for heating, or a passive heat-conducting temperature-stabilizing metal structure of the controlled thermoblock, or combinations thereof.

Furthermore, in the preferred embodiment these controlled thermoblocks and basic controlled thermoblocks are provided on their upper and lower surface areas in the mixture forming its body with hollow formed cast spaces into which connecting expansion metal thermal connectors are freely inserted, and at the same time, are provided on their surface areas in the mixture forming its body with hollow formed cast spaces into which control sensors are inserted.

Furthermore, in the preferred embodiment the expansion metal thermal connectors are in conductive contact with the internal metal structure.

Furthermore, in the preferred embodiment the hollow cast spaces for inserting thermal connectors are either parallel to the cylindrical space for the inserted high-pressure pipe for steam generation and to the cylindrical space for the heating rods of the electric heating device for supplying thermal energy, or they are perpendicular to the cylindrical spaces.

Furthermore, in the preferred embodiment the conduction of electrical energy of the thermal connectors is arranged in the insert for multi-phase conduction of electrical energy stored in the body of the controlled thermoblock.

Furthermore, in the preferred embodiment the surface area of the lower side of the controlled base thermoblocks is fitted with a first expansion metal plate.

Furthermore, in the preferred embodiment the insert with space for inserted high-pressure pipe for steam generation consists of at least one piece, which comes in various diameters and sizes.

Furthermore, in the preferred embodiment the insert with space for the heating rods of the system of electric heating device for supplying thermal energy consists of at least one piece, which comes in various diameters and sizes.

Furthermore, in the preferred embodiment the controlled thermoblock consists of the cylindrical insert with space for inserted high-pressure pipe for steam generation made of at least one piece of different diameters, and the insert with space for the heating rods of the system of electric heating device for supplying thermal energy consists of at least one piece, which comes in various diameters.

Furthermore, in the preferred embodiment the controlled base thermoblock consists of the cylindrical insert with space for inserted high-pressure pipe for steam generation made of at least one piece of different diameters, and the insert with space for the heating rods of the system of electric heating device for supplying thermal energy consists of at least one piece, which comes in various diameters.

Furthermore, in the preferred embodiment the cylindrical insert with space for inserted high-pressure pipe is conductive in the controlled thermoblock.

Furthermore, in the preferred embodiment the cylindrical insert with space for inserted high-pressure pipe is conductive in the controlled base thermoblock.

Furthermore, in the preferred embodiment the controlled thermoblock contains at least one cylindrical space (4) for heating the thermoblock with at least one equivalent cylindrical space (6) for high-pressure pipe for steam generation.

Furthermore, in the preferred embodiment the controlled base thermoblock contains at least one cylindrical space for heating the thermoblock with at least one equivalent cylindrical space for high-pressure pipe for steam generation.

Furthermore, in the preferred embodiment the recyclable construction waste includes materials such as concrete, porcelain, glass, ceramics, cinder, wood waste, metal filings and slag, stone gravel, or any combination thereof.

Furthermore, in the preferred embodiment the recyclable construction waste includes materials such as concrete, porcelain, glass, ceramics, cinder, wood waste, metal filings and slag, stone gravel, or any combination thereof.

The above mentioned disadvantages are further eliminated by an assembly with controlled thermoblocks and controlled base thermoblocks consisting of controlled thermoblocks and controlled base thermoblocks, the essence of which is that
the assembly is composed of a three-dimensional body and consists of freely stacked layers of controlled thermoblocks, with at least one layer, and a bottom layer of the assembly consisting of a layer of controlled base thermoblocks,
where all individual controlled thermoblocks are freely connected horizontally and vertically to each other using expansion metal thermal connectors (8), furthermore, the individual controlled base thermoblocks are freely connected horizontally to each other using expansion metal thermal connectors and vertically connected to each other using thermal connectors are a layer of controlled base thermoblocks and a layer of controlled thermoblocks located above it,
wherein the cylindrical spaces for high-pressure pipes for steam generation of individual controlled thermoblocks and controlled base thermoblocks in the assembly containing inserts are connected longitudinally in the axis,
wherein the cylindrical spaces for heating the controlled thermoblocks with an insert with space for heating rods of individual controlled thermoblocks in the assembly are connected longitudinally in the axis,
wherein the cylindrical spaces for heating the controlled base thermoblocks with an insert with space for heating rods of individual controlled base thermoblocks in the assembly are connected longitudinally in the axis,
wherein electric power lines are connected to the source of electrical energy together with the control temperature sensors for sensing temperature of the controlled thermoblocks or controlled base thermoblocks, where these electric power lines are interconnected in the individual thermoblocks.

In the preferred embodiment, the assembly with controlled thermoblocks and controlled base thermoblocks consists of building elements of controlled thermoblocks and controlled base thermoblocks of the same shape of a cube, a cuboid or a circular segment, or a combination of a cube, a cuboid, or a circular segment.

The above mentioned disadvantages are further eliminated by the arrangement of the assembly with controlled thermoblocks and controlled base thermoblocks, the essence of which is that the assembly with controlled thermoblocks and controlled base thermoblocks is placed with the surface area of the first expansion metal plate on a layer of loose metal expansion balls, which are placed on their opposite side on the second lower steel expansion plate inserted in the insulating layer of a thermally insulated solid base, composed of an insulating mixture consisting of a mixture of waste materials from the group of glass, stone, reinforced concrete, ceramics, or a combination thereof, wherein these second lower steel expansion plates are connected and form a single overall surface.

The above mentioned disadvantages are further eliminated by a thermoreactor containing the arrangement of the assembly with controlled thermoblocks and controlled base thermoblocks, the essence of which is that the arrangement of the assembly with controlled thermoblocks and controlled base thermoblocks is covered on the surface area of its upper part with a metal cover plate placed in a metal pocket, which plate is provided with through holes for double-sided pressure valves located in the support cylinders, where these valves pass through to outside the thermoreactor space.
wherein this assembly of arrangement and cover metal plate, outside the area of the support cylinders, is surrounded by a first thermal insulation layer,
wherein this first thermal insulation layer forms, together with the thermally insulated solid base, a compact closed body placed in the second thermal insulation layer, wherein the second thermal insulation layer is covered with second upper plates on expansion metal cylinders placed on hinged supports and between which there is a free connection,
where this set of expansion metal cylinders forming supports for the loosely connected upper first cover plates is located in the upper part of the third thermal insulation layer spatially above the support cylinders,
wherein high-pressure pipes for steam generation inserted in the inserts of individual controlled thermoblocks and controlled base thermoblocks of the assembly are connected to a steam generator with an electric generator for the generation of electrical energy,
wherein the heating rods of the electric heating device in the inserts for the heating rods of the individual controlled thermoblocks and controlled base thermoblocks are connected to the electric heating device,
wherein electric power lines for the thermal connectors are connected to the source of electrical energy for the thermal connectors and thermal sensors,
wherein the first upper cover plates rest with their lower side on the expansion device consisting of upper metal plates provided with holes for pressure valves, which rest on their opposite side on metal expansion balls, which rest on their opposite side on lower expansion metal plates with holes for inserting pressure valves,
wherein the lower expansion metal plate rests on support cylinders that rest on the opposite side of the cover plate,
wherein all of which is covered with a waterproofing layer, with the thermoreactor placed in the layer of insulating construction waste material.

Production of thermoblocks:
- using 3D printers,
- using formwork and vibration device to produce the shapes specified and described in this document,
- using a mould into which material is injected to produce the shapes specified and described in this document, with the holes and sleeves specified in this document,
- thermal load-bearing structure (3) may be omitted entirely in some smaller thermoblocks, depending on the size and weight; a thermoblock without the thermal load-bearing structure (3) may be produced,
- thermal connectors (8) can be of any shape, and the material can be: metal, ceramics, stone, copper, bronze, graphene, cast iron, alloy, or a mix of different materials that create strength and thermal conductivity.

The main advantage of the proposed solution of the thermoreactor with controlled thermoblocks is the stabilization and storage of large amounts of energy that has already been produced, preventing significant losses of energy already produced by photovoltaic, wind power, and biomass power plants, and it can also be used to remove waste energy in thermal power plants - by transferring hot steam directly to the lower thermoblocks of the thermoreactor instead of to cooling towers, thus making efficient use of waste energy.

The main reason for the creation of an innovative, robust, and flexible thermoreactor is to stabilize fluctuations and outages in the production of electricity from renewable and environmental resources.

This type of thermoreactor can be implemented in space exploration on other planets using 3D printing.

The thermoreactor can be implemented both on the surface using multiple thermal layers and below the surface.

The advantages and benefits of the proposed solution of the controlled thermoblock include maximizing the amount of stored energy by using different weights and mixes of block materials, thus storing energy throughout the controlled thermoblock, the possibility of variability for thermal conductivity efficiency by using different materials for better thermal conductivity efficiency of components and thus storage, and subsequently recovering energy from controlled thermoblocks.

Other advantages include reduced expansion and contraction of the mass of controlled thermoblock, broad-spectrum heating of the total mass of thermoblock, controlled heating and control of thermoblocks, easy servicing of the entire thermoreactor, and high storage efficiency.

The advantage is a relatively simple and effectively designed construction using dry connection of controlled thermoblocks by means of thermal connectors, the possibility of easy removal of the first thermal insulation layer for servicing of the thermoreactor, or the possibility of dismantling the entire thermoreactor assembly and transporting it easily by means of standard logistics transport.

The resulting comprehensive solution is therefore the creation of an emission-free and environmentally clean source of energy using recycled waste material.

### Explanation of drawings

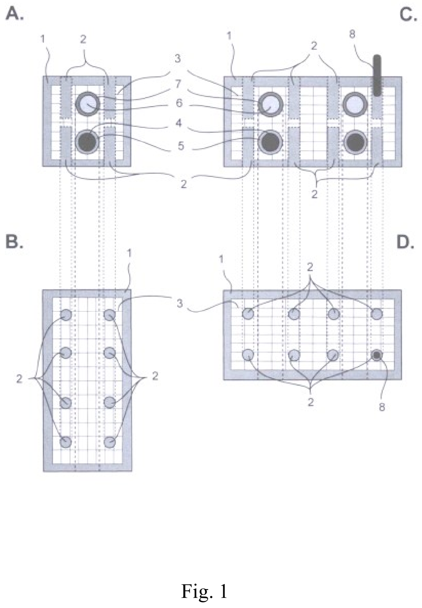

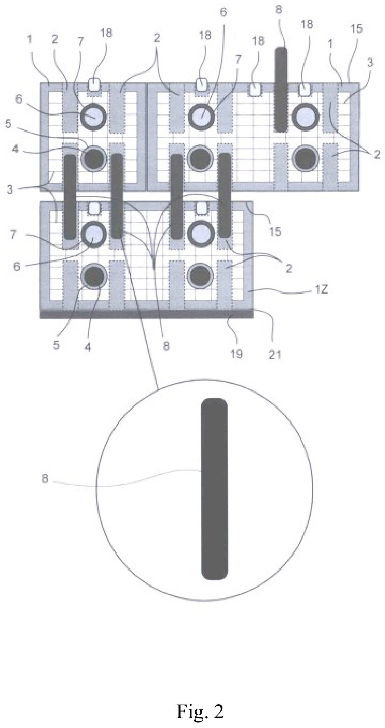

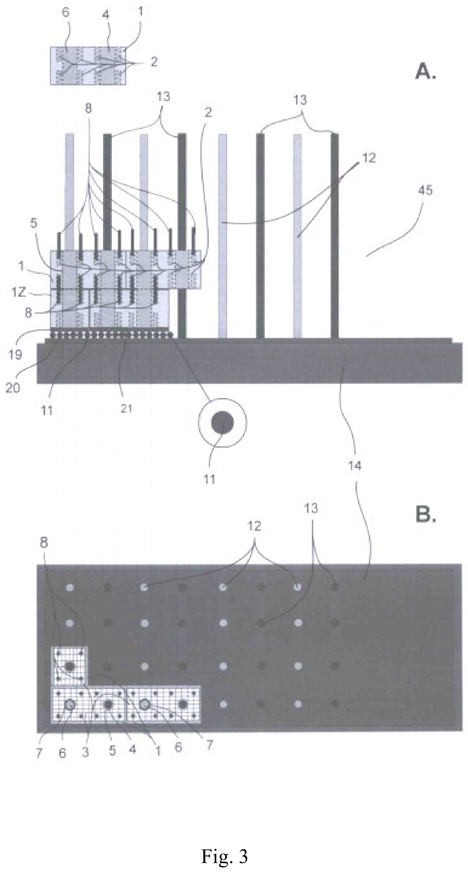

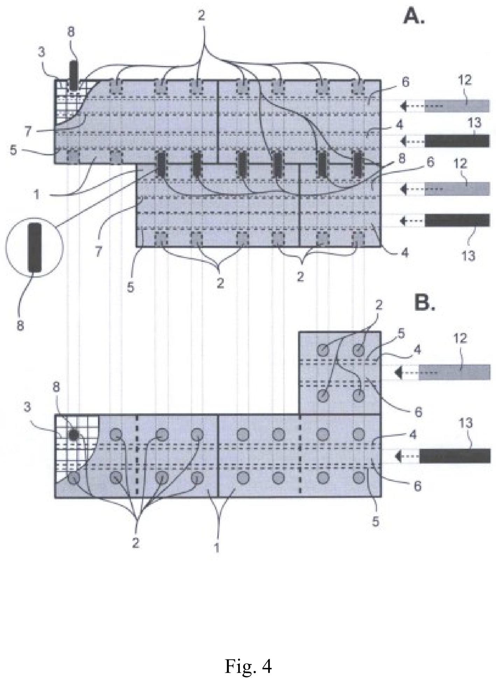

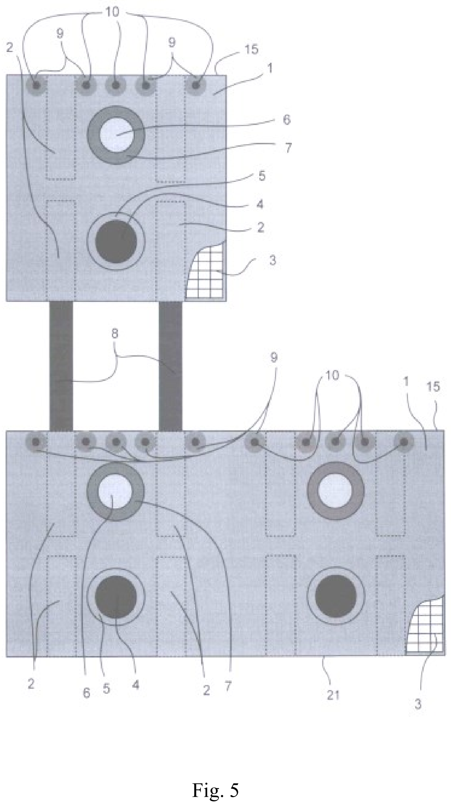

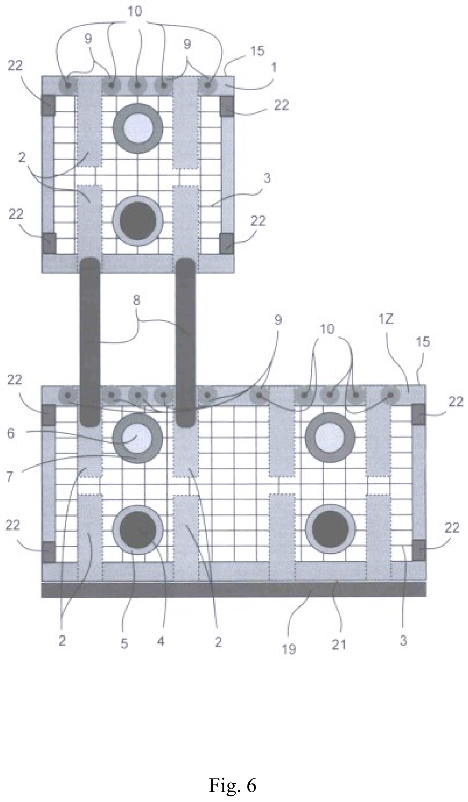

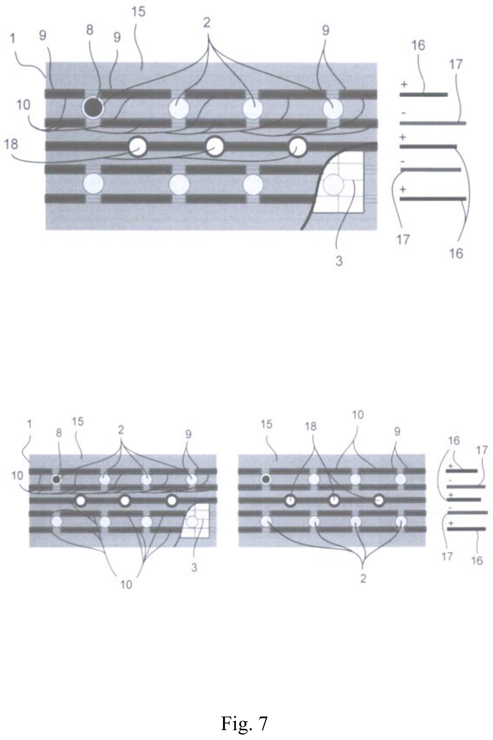

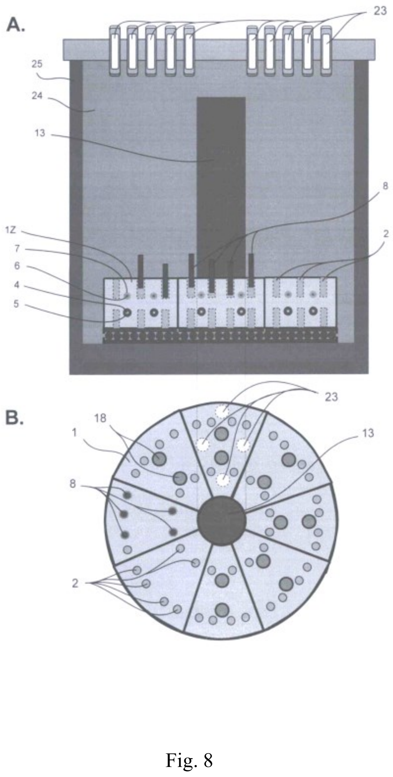

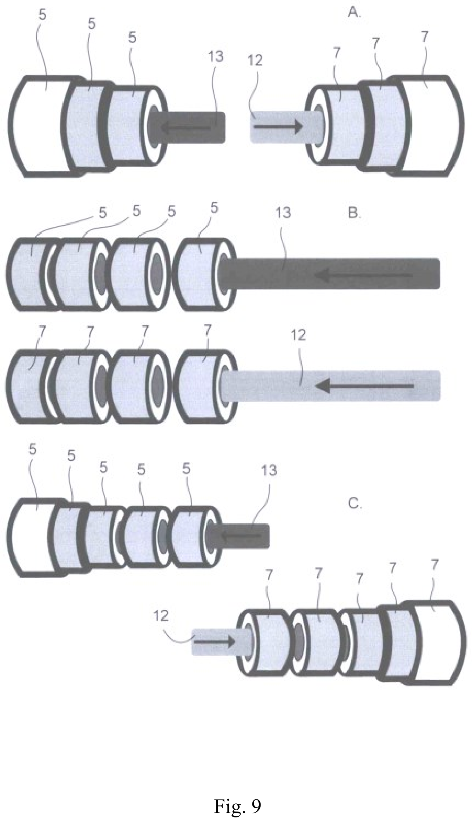

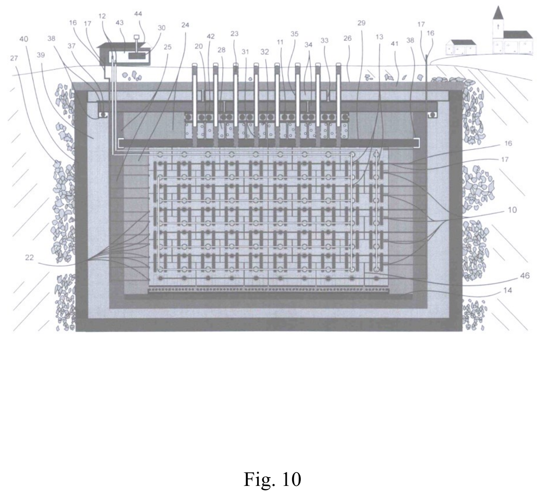

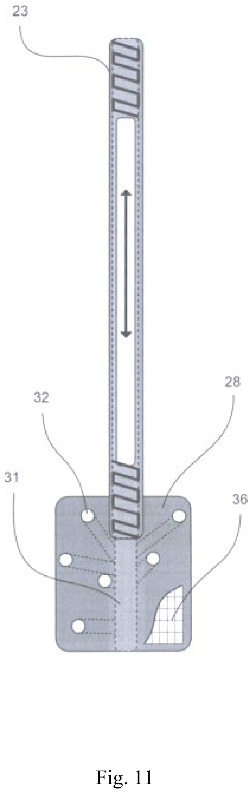

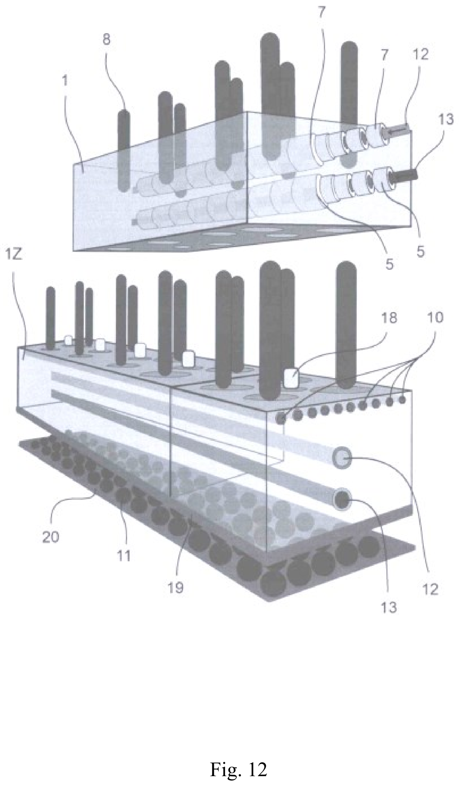

Fig. 1 shows the plan, side view, and floor plan of the controlled thermoblocks; Fig. 2 shows the connection of individual layers of controlled thermoblocks into an assembly with controlled thermoblocks; Fig. 3 shows the plan and floor plan of the entire assembly with controlled thermoblocks in the foundation pit; Fig. 4 shows the plan and floor plan with steam pipes and electric heating device routed horizontally; Fig. 5 shows a detail of the controlled thermoblocks with thermal connectors surrounded by multi-phase electric power line; Fig. 6 shows a detail of the connection of controlled thermoblocks with thermal connectors and the metal structure of controlled thermoblocks; Fig. 7 shows a detailed cross-sectional view of the controlled thermoblock with the connection of control sensors, thermal connectors with inserts for multi-phase electric power line; Fig. 8 shows an assembly with controlled thermoblocks of a different shape; Fig. 9 shows a detail of heat-conducting inserts with space; Fig. 10 shows the complete assembly of the entire thermoreactor and its arrangement in space as an example of embodiment of the invention; Fig. 11 shows an assembly of reinforced concrete support cylinder holding the upper plate; Fig. 12 shows a 3D image of controlled thermoblocks and controlled basic thermoblocks and their interconnection.

### Examples of the invention embodiments

Performance of the controlled thermoreactor:
One controlled thermoblock or one controlled base thermoblock has the capacity of stored energy of 20 kWh - 60 kWh, with dimensions of 2.5 m x 1 m x 1 m.

The controlled thermoreactor with a capacity of 50 MWh would require around 3,000 controlled thermoblocks.

Content of the thermoreactor in dimensions:
Length 100 m x width 50 m x height 17 m is 20,000 controlled thermoblocks and controlled base thermoblocks, with a total capacity of around 120 MWh - 200 MWh.

The rough estimate for the construction of one thermoreactor with dimensions of 100 m x 50 m x 17 m is 20 billion Czech korunas.

The essence of the invention is the finding of the most massive body of the controlled thermoblock 1 for the storage of electrical energy in a thermal condition, taking into account expansion and contraction in order to avoid damage at temperatures up to 800°C. This is already a developed mixture of concrete or ceramics. To reinforce the entire controlled thermoblock 1, a strong heat-conducting metal structure 3 is used.

The design is based on the principle of energy accumulation, which prevents heat loss, i.e. the possibility of heat loss directly from the carrier medium in which thermal energy is stored. The basis is to find a structural design for a massive body that will make the heat loss curve to slow down, a mass that can influence and change the direction of the heat energy loss curve, thereby retaining energy in the structural mass for a longer period of time, thus achieving more efficient storage of electrical energy in thermal condition in the invented concrete or ceramic mixture, with an effect much greater than storage in a single-type medium, such as storage in water, sand, or stone. The principle of the invention is in the mixture of materials if the invented controlled thermoblock, which is printed using the 3D printer or cast and, if necessary, fired in the manner of a brick. It contains a mixture of iron, stone, granite, glass, ceramics, porcelain, wood shavings, and other admixtures (or possibly using material from another planet that will be available and suitable for the production of thermoblocks using a 3D printer).

It should be noted that the fundamental problem with large structures of this kind is primarily expansion joints, which are an important part of many building structures and play a key role in their stability and durability. Properly designed and constructed expansion joints help prevent cracks, deformations, and other defects that could lead to costly repairs and reduce the service life of the structure. Their function is to prevent damage to building structures caused by thermal expansion and contraction of materials, vibrations, settlement of structures, and other influences.

The attached figures show, first, the controlled thermoblock 1 in various views and sections, or the controlled base thermoblock 1Z with the function of storing surplus electrical energy in a thermal condition in the range from 300°C to 800°C as a long-lasting thermal energy storage system composed of concrete or ceramic blocks. The images then show the upper part of the entire system of energy source, i.e. the assembly 45 of controlled thermoblocks 1 or controlled base thermoblock 1Z into the required energy production unit, then the arrangement 46 of the resulting assembly 45 of controlled thermoblocks 1 in a ground pit, and finally the final product of the energy source, i.e. thermoreactor 26.

The controlled thermoblock 1 or controlled base thermoblock 1Z is a regular three-dimensional body made of a concrete or ceramic mixture containing admixtures of recyclable construction waste, and is equipped inside its body with a metal structure 3, which is either a load-bearing metal structure 3 of the controlled thermoblock or controlled base thermoblock, or a heating heat-conducting metal structure 3 of the controlled thermoblock or controlled base thermoblock, which is connected to a source of electrical energy for heating, or a passive heat-conducting temperature-stabilizing metal structure 3 of the controlled thermoblock or controlled base thermoblock, or combinations thereof. This metal structure 3, consisting of a mixture of iron, copper, bronze, steel, graphene, and aluminium, thus forms an essential component of the entire system, as it has several functions, primarily load-bearing and then heat-conducting functions. In their body, the individual thermoblocks 1 or base blocks 1Z contain multi-phase electric power line 22 for metal heating structure 3.

The controlled thermoblocks 1 and controlled base thermoblocks 1Z consist of building elements of the same shape of a cube, a cuboid, or a circular segment, or a combination of a cube, a cuboid, or a circular segment.

There is either at least one cylindrical space 6 for high-pressure pipe for steam generation in the direction of the longitudinal axis of the thermoblocks 1 in the inner part of each controlled thermoblock 1 or controlled base thermoblock 1Z, with a cylindrical insert 7 with space for inserted high-pressure pipe 12 for steam generation, and further there is one cylindrical space 4 for heating the controlled thermoblocks 1 in the inner part of each controlled thermoblock 1 in the direction of its longitudinal axis parallel to each cylindrical space 6, with an insert 5 with space for heating rods of a system of electric heating device 13 for supplying energy. Alternatively, both cylindrical spaces 6 and 4 form a single cylindrical space with a common axis containing, in the inner part of each controlled thermoblock 1 in the direction of the longitudinal axis of the controlled thermoblock 1, one common space for inserting inserts 5 and 7. Individual thermoblocks 1 contain multi-phase electric power lines 10 for thermal connectors 8 and temperature sensors 18 in their body.

The cylindrical insert 7 with space for inserted high-pressure pipe 12 for steam generation consists of at least one piece, which comes in various diameters and sizes, and the insert 5 with space for the heating rods of the system of electric heating device 13 for supplying energy consists of at least one piece, which comes in various diameters and sizes.

The controlled thermoblocks 1 or controlled base thermoblocks 1Z are provided on their surface areas 15 in the structural mixture forming its body with hollow formed cast spaces 2 for inserting thermal connectors 8, into which connecting expansion metal thermal connectors 8 are freely inserted. These expansion metal thermal connectors 8 are in conductive contact with the internal metal structure 3. These hollow cast spaces 2 for inserting thermal connectors are either parallel to the cylindrical space 6 for the inserted high-pressure pipe 12 for steam generation and to the cylindrical space 4 for the heating rods of the electric heating device 13 for supplying electrical energy, or they are perpendicular to the cylindrical spaces 6 and 4, wherein the multi-phase line 10 arranged in the space 9 for supplying electrical energy is placed in the body of the controlled thermoblock 1.

The controlled thermoblock 1 or controlled base thermoblocks 1Z contain at least one cylindrical space 4 for heating the thermoblock with at least one equivalent cylindrical space 6 for high-pressure pipe for steam generation, but they contain at least one cylindrical space 6 for the inserted high-pressure pipe 12 for steam generation and the appropriate number of cylindrical spaces 4 for the heating rods of the electric heating device 13 for supplying electrical energy.

The controlled thermoblocks 1 or controlled base thermoblocks 1Z are made of recyclable construction waste, which includes materials such as concrete, porcelain, glass, ceramics, cinder, wood waste, metal filings and slag, stone gravel, or any combination thereof, thus also fulfilling an ecological function.

The assembly 45 is composed of a three-dimensional body and consists of freely stacked layers of controlled thermoblocks 1, with at least one layer, and a bottom layer of the assembly 45 consisting of a layer of controlled base thermoblocks 1Z,
where all individual controlled thermoblocks 1 1Z are freely connected horizontally and vertically to each other using expansion metal thermal connectors 8, furthermore, the individual controlled base thermoblocks 1Z are freely connected horizontally to each other using expansion metal thermal connectors 8 and vertically connected to each other using thermal connectors 8 are a layer of controlled base thermoblocks and a layer of controlled thermoblocks 1 located above it,
wherein the cylindrical spaces 6 for high-pressure pipes 12 for steam generation of individual controlled thermoblocks 1 and controlled base thermoblocks 1Z in the assembly containing inserts 6, e.g. heat-conducting, are connected longitudinally in the axis,
wherein the cylindrical spaces 4 for heating the controlled thermoblock with the insert 5 with space for heating rods 13 of individual controlled thermoblocks in the assembly are connected longitudinally in the axis,
wherein the cylindrical spaces 4 for heating the controlled base thermoblock with the insert 5 with space for heating rods 13 of individual controlled base thermoblocks in the assembly are connected longitudinally in the axis,
wherein multi-phase electric power lines 10 are connected to the multi-phase source of electrical energy 16, 17 together with the control sensors 18 of the controlled thermoblock 1 or controlled base thermoblock 1Z, where these multi-phase electric power lines 10 are interconnected in the individual thermoblocks.

The multiple-phase electric power lines 16 and 17, independent of each other, and other multiple-phase electric power lines 10 run further connections through inserts 9 for multiple-phase electric power lines through electric power lines 10 to thermal connectors 8 and connect the control sensors 18 located on the surface area 15 of the controlled thermoblock 1. These sensors 18 provide feedback on the overall temperature of cold and hot spots in the controlled thermoblocks 1or controlled base thermoblocks 1Z. One or more of these sensors 18 may be located on the surface area 15 of the controlled thermoblock 1.

The inserts 5 and 7 are single-layer or multi-layer inserts in layers from small to large, or several in a row, or a combination of these in a row and at the same time layered from smaller to larger diameter. They perform an expansion function and prevent excessive tension when thermoblocks are heated by electric heating device. These inserts 5 and 7 may be in direct contact with the metal load-bearing structure 3, similarly to the thermal connectors 8.

The assembly 45 of controlled thermoblocks 1 or controlled base thermoblocks 1Z consists of building elements of thermoblocks 1 of the same shape of a cube, a cuboid, or a circular segment, or a combination of a cube, a cuboid, or a circular segment.

The arrangement 46 of the assembly 45 with controlled thermoblocks 1 includes the assembly 45 with controlled thermoblocks 1 and controlled base thermoblocks 1Z placed in the thermal insulation pit consisting of the thermally insulated solid base 14 composed of an insulating mixture consisting of a mixture of waste materials from the group of glass, aggregate, reinforced concrete, ceramics, or a combination thereof.

This arrangement 46 is fitted with the first steel expansion plate 19 on the surface area of the lower side 21 of the lower layer of base thermoblocks 1Z as part of the lower layer of thermoblocks 1, which first steel expansion plate 19 is placed with its opposite surface on the layer of loose metal balls 11, which are placed on their opposite side on the second steel expansion plate 20, inserted in the insulating layer of the thermally insulated solid base 14.

The thermoreactor 26 contains the arrangement 46 of the assembly 45 with controlled thermoblocks 1 or controlled base thermoblocks 1Z, which is covered on the surface area of its upper side with a metal cover plate 29 placed on metal supports 38', where this arrangement 46 has, in the space above its upper side above the metal cover plate 29 with through-way double-sided pressure valves 23 placed in the support cylinders 28, where these valves 23 pass through to outside the space of the thermoreactor 26, wherein this metal cover plate 29 outside the area of the support cylinders 28 and also the sides of the arrangement 46 with controlled thermoblocks 1 or controlled base thermoblocks 1Z are covered with the first thermal insulation layer 24, wherein this first thermal insulation layer 24, e.g. made of perlite or expanded clay, forms a compact closed body with the thermally insulated solid base 14, provided on its surface with the second thermal insulation layer 25, e.g. made of fired bricks, fireclay, sandstone.

The high-pressure pipes 12 for steam generation inserted in the inserts 7 of individual controlled thermoblocks 1 of the assembly 45 of controlled thermoblocks 1 are then connected to the steam generator 30 with the electric generator 30 for the generation of electrical energy.

The heating rods of the electric heating device 13 in the inserts 5 for the heating rods of the individual controlled thermoblocks 1or controlled base thermoblocks 1Z are connected to multi-phase electric power lines 16, 17.

The multi-phase electric power lines 10 for the thermal connectors 8 are connected to the multi-phase electric power lines 16 and 17 for the thermal connectors 8, wherein in the upper part of the second thermal insulation layer 25, in the area above the support cylinders 28, there is a set of metal expansion cylinders 37 forming hinged supports for the top cover plate 34.

The upper side of the second thermal insulation layer 25 is covered with upper second cover plates 34' on expansion metal cylinders 37 placed on metal cover hinged supports 38, between which there is a free connection 33 of the upper cover plates of the thermoreactor 26, all of which is covered with the third waterproofing layer 39, wherein the thermoreactor 26 is placed in the layer 27 of insulating construction waste material. The pressure valves 23 are inserted into the support cylinder 28 through the hole 31 for inserting the pressure valve into the support cylinder. The support cylinder 28 is provided with holes 12 for the release of excess pressure or negative pressure.

The upper cover plates 34 rest with their lower side on the system of expansion metal plates 42 with holes for double-sided pressure valves 23. This metal plate 42 rests on its opposite side on metal balls 11, which rest on their opposite side on the lower second expansion metal plate 20 with holes 35 for inserting double-sided pressure valves 23.

The expansion elements 20, 11, and 42 rest with their lower second expansion metal plate 20 on the opposite side on the support cylinders 28, which have holes for inserting the pressure valve 23 into the support cylinder.

The support cylinders 28 rest with their opposite side on the cover metal plate 29.

All of this is covered with the waterproofing layer 41, with the thermoreactor 26 placed in the layer 27 of insulating construction waste material.

Surplus electrical energy is fed into the controlled thermoreactor 26 in the manner controlled from the control centre 44 for the entire controlled thermoreactor 26, where this surplus electrical energy is fed in the controlled manner through the multi-phase power electric lines 16, 17 and pass through the through holes through the upper thermal insulation cover 41 and continue through the upper cover plate 34 in the second thermal insulation layer 25, from which they pass through the first thermal insulation layer 24 to the connected load-bearing heating metal structure 3 using multi-phase connections of electric power lines 22 and 10 for thermal connectors 8 and temperature sensors 18. The controlled thermoblock 1 or controlled base thermoblock 1Z is equipped with at least one connection of the multi-phase electric power line 22 for the load-bearing heating structure and at least one multi-phase connection 10 for thermal connectors 8 and temperature sensors 18.

The present description outlines the method that will be used to store electrical energy:
Electrical energy will be stored in thermal condition using the invention of various types of controlled thermoblocks, which are made of a mix of concrete mixture or ceramic mixture that is then fired.

These mixtures are designed in the manner that allows maximum time to maintain thermal energy in the controlled thermoblock. The mixture is also adapted for repeated thermal expansion and contraction so that there is no damage to the controlled thermoblock 1 or the controlled base thermoblock 1Z.

In order to control expansion and contraction, a technical solution has also been invented that will help to heat any thermoblock 1 evenly. This proposes a technical solution for the use of the load-bearing metal structure 3 made of heat-conductive metal material, which fulfils multiple functions. One of them is that it holds the entire controlled thermoblock 1 or controlled base thermoblock 1Z together without damage during relocation and installation. Another function of this load-bearing heat-conducting structure 3 is to serve as a heating element for any thermoblock 1 and 1Z.

Another element for broad-spectrum heating of controlled thermoblocks 1 and 1Z are thermal connectors 8, which are placed in pre-cast spaces 2 for inserting thermal connectors 8 in the mixture of concrete or ceramic mixture of any thermoblock. The thermal connectors 8 are inserted into these pre-prepared spaces 2 for these thermal connectors 8, specifically into the interior of the controlled thermoblock 1 or the controlled base thermoblock 1Z. They are in direct contact with the load-bearing heating structure 3, wherein these thermal connectors 8 allow us to use not only the heating functions but also the possibility of structural dry connection of any thermoblock to any other thermoblocks. In addition to dry connection function, these thermal connectors 8 also perform the heating function. When switched on, they heat any thermoblock and also other controlled thermoblocks 1 or controlled thermoblocks 1Z placed on it, which are connected by means of thermal connectors 8.

Any thermoblock 1 has another main heating device, which is the proposed technical solution of the heating device 13 located in the space 4 and connected to the multi-phase electric power lines 16, 17. These heating elements of the controlled thermoblock 1 or controlled base thermoblock 1Z and the load-bearing heating structure 3, including thermal connectors 8, can be controlled and regulated simultaneously via multi-phase electric power lines 16, 17 and control centre 44. Or each heating assembly can be controlled independently of each other separately via multi-phase electric power lines 16, 17, which are connected to each heating source separately and independently of each other and via control centre 44. Everything can then be controlled via GPS, mobile phone, or computer. The technical solution proposed in this way will enable control of the entire assembly of controlled thermoblocks 1 or each controlled base thermoblock 1Z independently of each other, including individual parts of any specific thermoblock 1, 1Z.

The entire assembly of thermoblocks is arranged on a thermally insulated solid base 14 using the technical solution of the all-surface expansion connection, namely the second lower metal expansion plate 20, which is attached with its lower side to the insulated base 14, while on the opposite side of this metal plate 20 there are metal balls 11. These metal balls 11 are connected on the lower side to the expansion metal plate 20 and on the opposite side are connected in the load-bearing manner to the upper first expansion metal plate 19, which is an integral part of each base controlled thermoblock 1Z, on the lower side 21 of which this first expansion metal plate 19 forms an integral part.

The entire connection of controlled thermoblocks 1 and controlled thermoblocks 1Z by means of installed thermal connectors 8 is the proposed solution, which is the connection through thermal connectors 8 and space for inserts 9 for electric power lines and multi-phase electric power lines 10 of thermal connectors, which is connected by means of the multi-phase electric power lines 12,11.

Another part of the connection of the controlled thermoblock 1 or controlled base thermoblock 1Z is inserting the main electric heating devices 13 into space 4 for heating the controlled thermoblock 1 or controlled base thermoblock 1Z and then connecting them to the multi-phase electric power lines 16, 17. Another connection is the heating load-bearing metal structure 3 via the multi-phase electric power line 22, and another is the connection of control temperature sensors 18 with the multi-phase electric power line 10, which are already part of the surface area 15 and are connected to the multi-phase electric power lines 16, 17. Each controlled thermoblock 1 or controlled base thermoblock 1Z, multi-phase electric power lines 16, 17 running into the controlled thermoreactor 26 are connected in the manners described.

In the second thermal insulation layer 25, there are the multi-phase electric power lines 16, 17 attached to the third thermal insulation layer 39 and outside the assembly of controlled thermoblocks 1 or controlled base thermoblocks 1Z, it runs to the surface through the upper cover plate 34, then through the thermal insulation cover 44 and subsequently outside the controlled thermoreactor 26 to the control centre 44.

The connection of pipe 12 for steam generation runs from the high-pressure steam device 43 located in the control centre 44 through the waterproofing cover 44, then through the upper cover plate 34, then through the second thermal insulation layer 25, then through the connected pipe 12 directly on the walls of the controlled thermoblock or controlled base thermoblock 1Z through the pipe into space 6 for high-pressure pipe for steam generation with the proposed technical solution for this purpose, which forms one or more circuits for steam generation. The steam generated is then returned through the pipe 12 for steam generation to the high-pressure steam device 43, where the steam generator 30 generates electrical energy and supplies it to the infrastructure of the city.

The entire block of the controlled thermoreactor 26 consists of the core composed of controlled thermoblocks and controlled base thermoblocks 1Z, which are connected to the multi-phase electric power lines 16, 17 and to the pipe 12 for steam generation. The entire core, composed of controlled thermoblocks 1 and controlled base thermoblocks 1Z, which includes expansion connection of elements 20, 11, 19, 21 in the lower part, which is an integral part of the thermally insulated solid base 14, thus forming a unit that is part of the first thermal insulation layer 24, where the technical solution for the cover upper plate 29 is designed in the upper part of the controlled thermoblock to protect against coarse impurities and prevent the free movement of heated air. It also includes holes for pressure valves 23, for which the proposed technical solution is used involving the support reinforced concrete cylinder 28 made of thermal concrete containing metal reinforcement 36, and holes 32 for the release of excess pressure or negative pressure, which protects against clogging of the pressure valves 23.

The pressure relief valves 23 pass to the surface through expansion metal plates 20 and 42, through the upper thermal insulation plate 34, and through the waterproofing cover 41, which protects the entire core of the controlled thermoreactor 26 from moisture in the upper part of the controlled thermoreactor 26. It includes the cover upper plate 34 made of thermally insulating concrete. This cover uses the proposed technical solution and dry arrangement on expansion metal cylinders 37 and metal hinged supports 38, while the other side of the upper thermal insulation cover 34 is freely connected by dry expansion using the metal expansion plate 42, which rests with one side on the upper cover plate 34 and with the other side is connected over its entire surface to metal balls 11 by expansion. These expansion metal balls 11 are connected by expansion on their other side to the expansion metal plate 20, which rests with its lower opposite side on reinforced concrete cylinders 28. A technical solution has been proposed for this entire expansion structure and its support, consisting of reinforced concrete support cylinders 28 made of thermal concrete, which support and carry, on their upper side, the entire expansion device composed of elements 20, 11, 42 and the upper cover plate 34, while the opposite side of these reinforced concrete support cylinders 28 rests on the upper side of the cover plate 29 and, on the opposite side, this cover plate 29 rests on the surface 15 of the controlled thermoblock 1.

The advantage is the possibility of constructing various types and sizes of thermoreactors using the designed controlled thermoblocks in larger dimensions, the possibility of implementation in space using 3D printers and raw materials directly from the surface of planets.

The advantage is controlled heating and control of thermoblocks as needed, using data obtained from sensors located on the controlled thermoblocks, with the help of which the entire system is connected to the GPS signal, using a mobile phone or computer, we can remotely monitor the condition of the entire controlled thermoreactor, including specific individual controlled thermoblock.

The advantage of the proposed technical solution for the controlled thermoreactor is the easy servicing of the entire controlled thermoreactor using the proposed technical solution of dry connection of controlled thermoblocks, dry insulating backfill of controlled thermoblocks, dry installation of the cover of the controlled thermoreactor, further dry arrangement of concrete support cylinders, and dry arrangement of the entire upper insulation cover.

The advantage is that the proposed technical solution for eliminating excess pressure or negative pressure in the controlled thermoreactor consists of pressure valves installed on the top of the controlled thermoreactor, which pass through the upper insulating cover, then through reinforced concrete support cylinders, and finally through the metal flap.

In a preferred embodiment, the proposed solution prevents the destruction of controlled thermoblocks while maintaining the mobility caused by the working heating and cooling of controlled thermoblocks due to the tension of materials in the controlled thermoblock. For this purpose, a technical solution has been proposed to arrange the expansion connection under the lower controlled thermoblocks, which form the base of all controlled thermoblocks, and each of them has the metal plate on the lower part that is not connected to the adjacent metal plate, which is then freely supported on metal balls, and these balls are placed on the metal plate that is placed on the thermally insulated base plate.

The advantage is the proposed solution to prevent destruction in the controlled thermoreactor in the following manner: arrangement of the expansion connection on the top of all stacked controlled thermoblocks, arrangement of the loose metal plate on metal balls, on which the metal plate and the remaining entire upper structure, including reinforced concrete cylindrical supports, are placed under this expansion mechanism on this metal surface.

The advantage is the proposed solution for supporting the entire upper cover using reinforced concrete cylinders made of thermal concrete.

An example of the possible practical design for the entire energy unit is the structure consisting of the first thermoreactor for continuous energy supply and the second thermoreactor for backup energy supply with at least twice the thermal capacity of the first thermoreactor, where the thermoreactors are arranged in the ground pit covered and encased in the insulating mixture, or the possibility of above-ground implementation of the entire thermoreactor with multi-layer thermal insulation.

### Industrial applicability

The thermoreactor is designed to store surplus unused electricity generated by photovoltaic power plants, wind power plants, biomass power plants, hydroelectric power plants, and other sources where the electricity generated is not stored.

The thermoreactor is designed to stabilize the electricity already generated in grids so that there are no drops or fluctuations in power in the grids.

The ability to generate and supply electricity from stored thermal energy to the infrastructure of cities even when the sun is not shining, the wind is not blowing, and river levels are low, despite this, the thermoreactor will still be able to generate and supply electricity to the grid for several days.

The thermoreactor can be used to provide a stable supply of electricity for the entire infrastructure of cities, depending on the size of implementation of the thermoreactor.

The thermoreactor can be used for construction in space with the help of 3D printing on other planets and using soil from the surface.

### List of index reference numerals

1 - Controlled thermoblock
1Z - Controlled basic thermoblock
2 - Cast spaces for inserting thermal connectors
3 - Load-bearing and heating metal structure
4 - Space for heating the thermoblock
5 - Insert(s) (one or more inserts)
6 - Space for high-pressure pipes for steam generation
7 - Insert(s) (one or more inserts)
8 - Thermal connector
9 - Insert for multi-phase electricity line
10 - Space for multi-phase electricity line
11 - Metal expansion balls
12 - Pipe for steam generation
13 - Electric heating device
14 - Thermally insulated bases
15 - Thermoblock surface
16 - Multi-phase electric power line
17 - Multi-phase electric power line
18 - Control sensors
19 - Expansion metal plate on the lower basic thermoblocks
20 - Expansion metal plate, lower
21 - Lower side of the surface of the lower layer of the controlled thermoblock
22 - Multi-phase electric power line to the load-bearing and heating metal structure
23 - Pressure relief valves
24 - First thermal insulation layer
25 - Second thermal insulation layer
26 - Controlled thermoreactor
27 - Construction insulation waste, mixture of crushed stone, concrete, ceramics, glass, etc.
28 - Reinforced concrete cylinder made of thermal concrete
29 - Cover thermal insulation plate
30 - Steam generator for electricity generation
31 - Hole for inserting the pressure valve
32 - Holes in reinforced concrete support cylinders
33 - Dry connection of upper cover plates
34 - Thermal insulation upper cover plate
35 - Hole in the upper cover plate
36 - Metal reinforcement
37 - Expansion metal cylinder, hinged support for the upper cover plate
38 - Metal supports
39 - Third thermal insulation layer
40 - Waterproofing layer
41 - Waterproofing cover
42 - Expansion metal upper plate
43 - Steam generating installation
44 - Control centre for controlled thermoreactor
45 - Assembly with controlled thermoblocks and controlled base thermoblocks
46 - Arrangement of the assembly with controlled thermoblocks and controlled base thermoblocks

## Claims

1. A controlled thermoblock (1) for storing surplus electrical energy in a thermal condition in the range from 300°C to 800°C as a long-lasting thermal energy storage system, **characterized in that**
the controlled thermoblock (1) is a regular three-dimensional body made of a concrete or ceramic mixture containing admixtures of recyclable construction waste,
wherein it is equipped inside its body with a metal structure (3), which is either a load-bearing metal structure (3) of the controlled thermoblock, or a heating hot-water metal structure (3) of the controlled thermoblock, which is connected to a source of electrical energy for heating, or a passive heat-conducting temperature-stabilizing metal structure (3) of the controlled thermoblock, or combinations thereof,
wherein either there is at least one cylindrical space (6) for high-pressure pipe for steam generation in the inner part of each controlled thermoblock (1) in the direction of the longitudinal axis of the controlled thermoblock (1), with a cylindrical insert (7) with space for inserted high-pressure pipe (12) for steam generation, and further there is at least one cylindrical space (4) for heating the controlled thermoblock (1) in the inner part of each controlled thermoblock (1) in the direction of its longitudinal axis parallel to each cylindrical space (6), with an insert (5) with space for heating rods of a system of electric heating device (13) for supplying thermal energy,
or both cylindrical spaces (6) and (4) form a single cylindrical space with a common axis containing, in the inner part of each controlled thermoblock (1) in the direction of the longitudinal axis of the controlled thermoblock (1), at least one common space for inserting inserts (5, 7),
wherein these controlled thermoblocks (1) are provided on their upper and lower surface areas (15) in the mixture forming its body with hollow formed cast spaces (2) into which connecting expansion metal thermal connectors (8) are freely inserted, and at the same time, are provided on their surface areas (15) in the mixture forming its body with hollow formed cast spaces into which control sensors (18) are inserted,
wherein these expansion metal thermal connectors (8) are in conductive contact with the internal metal structure (3),
wherein these hollow cast spaces (2) for inserting thermal connectors are either parallel to the cylindrical space (6) for the inserted high-pressure pipe (12) for steam generation and to the cylindrical space (4) for the heating rods of the electric heating device (13) for supplying thermal energy, or they are perpendicular to the cylindrical spaces (6, 4),
wherein the electrical power lines (10) of the thermal connectors (8) are arranged in the insert (9) for multi-phase electrical power lines placed in the body of the controlled thermoblock (1).

2. A controlled base thermoblock (1Z) for storing surplus electrical energy in a thermal condition in the range from 300°C to 800°C as a long-lasting thermal energy storage system, **characterized in that**
the controlled base thermoblock (1Z) is a regular three-dimensional body made of a concrete or ceramic mixture containing admixtures of recyclable construction waste,
wherein it is equipped inside its body with a metal structure (3), which is either a load-bearing metal structure (3) of the controlled base thermoblock, or a heating hot-water metal structure (3) of the controlled base thermoblock, which is connected to a source of electrical energy for heating, or a passive heat-conducting temperature-stabilizing metal structure (3) of the controlled base thermoblock, or combinations thereof,
wherein either there is at least one cylindrical space (6) for high-pressure pipe for steam generation in the inner part of each controlled base thermoblock (1Z) in the direction of the longitudinal axis of the controlled base thermoblock (1Z), with a cylindrical insert (7) with space for inserted high-pressure pipe (12) for steam generation, and further there is at least one cylindrical space (4) for heating the controlled base thermoblock (1Z) in the inner part of each controlled base thermoblock (1Z) in the direction of its longitudinal axis parallel to each cylindrical space (6), with an insert (5) with space for heating rods of a system of electric heating device (13) for supplying thermal energy,
or both cylindrical spaces (6) and (4) form a single cylindrical space with a common axis containing, in the inner part of each controlled base thermoblock (1Z) in the direction of the longitudinal axis of the controlled base thermoblock (1Z), at least one common space for inserting inserts (5, 7),
wherein these controlled base thermoblocks (1Z) are provided on their upper surface areas (15) in the mixture forming its body with hollow formed cast spaces (2) into which connecting expansion metal thermal connectors (8) are freely inserted, and at the same time, are provided on their surface areas (15) in the mixture forming its body with hollow formed cast spaces into which control sensors (18) are inserted,
wherein these expansion metal thermal connectors (8) are in conductive contact with the internal metal structure (3),
wherein these hollow cast spaces (2) for inserting thermal connectors are either parallel to the cylindrical space (6) for the inserted high-pressure pipe (12) for steam generation and to the cylindrical space (4) for the heating rods of the electric heating device (13) for supplying thermal energy, or they are perpendicular to the cylindrical spaces (6, 4),
wherein the surface area of the lower side (21) of the controlled base thermoblocks (1Z) is fitted with a first expansion metal plate (19),
wherein the electrical power lines (10) of the thermal connectors (8) are arranged in the insert (9) for multi-phase electrical power lines placed in the body of the controlled base thermoblock (1Z).

3. The controlled thermoblock (1) according to claim 1, **characterized in that**
the cylindrical insert (7) with space for inserted high-pressure pipe (12) for steam generation consists of at least one piece, which comes in various diameters and sizes,
and the insert (5) with space for the heating rods of the system of electric heating device (13) for supplying thermal energy consists of at least one piece, which comes in various diameters and sizes.

4. The controlled base thermoblock (1Z) according to claim 2, **characterized in that**
the cylindrical insert (7) with space for inserted high-pressure pipe (12) for steam generation consists of at least one piece, which comes in various diameters and sizes,
and the insert (5) with space for the heating rods of the system of electric heating device (13) for supplying energy consists of at least one piece, which comes in various diameters and sizes.

5. The controlled thermoblock (1) according to claims 1 and 3, **characterized in that**
the cylindrical insert (7) with space for inserted high-pressure pipe is heat conductive.

6. The controlled base thermoblock (1Z) according to claims 2 and 4, **characterized in that**
the cylindrical insert (7) with space for inserted high-pressure pipe is heat conductive.

7. The controlled thermoblock (1) according to claims 1 and 3 and 5, **characterized in that**
the controlled thermoblock (1) contains at least one cylindrical space (4) for heating thermoblock with at least one equivalent cylindrical space (6) for high-pressure pipe for steam generation.

8. The controlled base thermoblock (1Z) according to claims 2 and 4 and 6, **characterized in that**
the controlled base thermoblock (1Z) contains at least one cylindrical space (4) for heating thermoblocks with at least one equivalent cylindrical space (6) for high-pressure pipe for steam generation.

9. The controlled thermoblock (1) according to claims 1 and 3 and 5 and 7, **characterized in that**
recyclable construction waste includes materials such as concrete, porcelain, glass, ceramics, cinder, wood waste, metal filings and slag, stone gravel, or any combination thereof.

10. The controlled base thermoblock (1Z) according to claims 2 and 4 and 6 and 8, **characterized in that** the recyclable construction waste includes materials such as concrete, porcelain, glass, ceramics, cinder, wood waste, metal filings and slag, stone gravel, or any combination thereof.

11. An assembly (45) with controlled thermoblocks (1) and controlled base thermoblocks (1Z) composed of controlled thermoblocks (1) according to claim 1 and controlled base thermoblocks (1Z) of claim 2, **characterized in that**
the assembly (45) is composed of a three-dimensional body and consists of freely stacked layers of controlled thermoblocks (1), with at least one layer, and a bottom layer of the assembly (45) consisting of a layer of controlled base thermoblocks (1Z),
where all individual controlled thermoblocks (1) are freely connected horizontally and vertically to each other using expansion metal thermal connectors (8), furthermore, the individual controlled base thermoblocks (1Z) are freely connected horizontally to each other using expansion metal thermal connectors (8) and vertically connected to each other using thermal connectors (8) are a layer of controlled base thermoblocks (1Z) and a layer of controlled thermoblocks (1) located above it,
wherein the cylindrical spaces (6) for high-pressure pipes for steam generation of individual controlled thermoblocks (1) and controlled base thermoblocks (1Z) in the assembly (45) containing inserts (7) are connected longitudinally in the axis,
wherein the cylindrical spaces (4) for heating the controlled thermoblocks (1) with an insert (5) with space for heating rods of individual controlled thermoblocks (1) in the assembly (45) are connected longitudinally in the axis,
wherein the cylindrical spaces (4) for heating the controlled base thermoblocks (1Z) with an insert (5) with space for heating rods of individual controlled base thermoblocks (1Z) in the assembly (45) are connected longitudinally in the axis,
wherein electric power lines (10) are connected to the source of electrical energy together with the control temperature sensors (18) of the controlled thermoblocks (1) or controlled base thermoblocks (1Z), where these multi-phase electric power lines (10) are interconnected in the individual thermoblocks (1, 1Z).

12. The assembly (45) with controlled thermoblocks (1) and controlled base thermoblocks (1Z) according to claim 11, **characterized in that**
it consists of building elements of controlled thermoblocks (1) of claim 1 and controlled base thermoblocks (1Z) of claim 2 of the same shape of a cube, a cuboid, or a circular segment, or combinations of the shape of a cube, a cuboid, or a circular segment.

13. An arrangement (46) of the assembly (45) with controlled thermoblocks (1) and controlled base thermoblocks (1Z) according to claim 11, **characterized in that**
the assembly (45) with controlled thermoblocks (1) and controlled base thermoblocks (1Z) is placed with the surface area of the first expansion metal plate (19) on a layer of loose metal expansion balls (11), which are placed on their opposite side on the second lower steel expansion plate (20) inserted in the insulating layer of a thermally insulated solid base (14), composed of an insulating mixture consisting of a mixture of waste materials from the group of glass, stone, reinforced concrete, ceramics, or a combination thereof, wherein these second lower steel expansion plates (20) are connected and form a single overall surface.

14. A thermoreactor (26) containing the arrangement (46) of the assembly (45) with controlled thermoblocks (1) and controlled base thermoblocks (1Z) according to claim 13, **characterized in that**
the arrangement (46) of the assembly (45) with controlled thermoblocks (1) and controlled base thermoblocks (1Z) is covered on the surface area of its upper part with a metal cover plate (29) placed in a metal pocket (38'), which plate (29) is provided with through holes for pressure valves (23) located in the support cylinders (28), where these valves (23) pass through to outside the space of the thermoreactor (26),
wherein this assembly of arrangement (46) and cover metal plate (29), outside the area of the support cylinders (28), is surrounded by a first thermal insulation layer (24),
wherein this first thermal insulation layer (24) forms, together with the thermally insulated solid base (14), a compact closed body placed in the second thermal insulation layer (25), wherein the second thermal insulation layer (25) is covered with second upper plates (34) on expansion metal cylinders (37) placed on hinged supports (38) and between which there is a free connection,
where this set of expansion metal cylinders (37) forming supports for the loosely connected upper first cover plates (34) is located in the upper part of the third thermal insulation layer (39) spatially above the support cylinders (28),
wherein high-pressure pipes (12) for steam generation inserted in the inserts (7) of individual controlled thermoblocks (1) and controlled base thermoblocks (1Z) of the assembly (45) are connected to a steam generator (43) with an electric generator (30) for the generation of electrical energy,
wherein the heating rods of the electric heating device in the inserts (5) for the heating rods of the individual controlled thermoblocks (1) and controlled base thermoblocks (1Z) are connected to the electric heating device (13),
wherein the multi-phase electric power lines (10) of the thermal connectors (8) are connected to the multi-phase electrical power supply lines (16, 17) for the thermal connectors (8) and control sensors (18),
wherein the first upper cover plates (34) rest with their lower side on the expansion device consisting of upper metal plates (42) provided with holes for pressure valves (23), which rest on their opposite side on metal expansion balls (11), which rest on their opposite side on lower expansion metal plates (20) with holes (35) for inserting pressure valves (23),
wherein the lower expansion metal plate (20) rests on support cylinders (28) that rest on the opposite side of the cover plate (29),
wherein all of which is covered with a waterproofing layer (41), with the thermoreactor (26) placed in the layer (27) of insulating construction waste material.
